# EUROPÄISCHE PATENTANMELDUNG

(11) **EP 0 827 058 A2**
(43) Veröffentlichungstag der Anmeldung: **04.03.1998**
(21) Anmeldenummer: 97112903.6
(22) Anmeldetag: 26.07.1997
(51) Int. Cl.: G05G 5/18, F16H 59/10

(54) **Vorrichtung zur Totpunkt-Überwindung bei einer Rastenscheibe, insbesondere zur Betätigung eines Automatgetriebes**

(30) Priorität: 31.07.1996 DE 19630806
(71) Anmelder: ZF FRIEDRICHSHAFEN Aktiengesellschaft, 88038 Friedrichshafen (DE)
(72) Erfinder: Bucksch, Manfred, 88046 Friedrichshafen (DE); Pfalz, Rainer, 88045 Friedrichshafen (DE)

(57) **Zusammenfassung**

Die Erfindung betrifft eine Vorrichtung zur Totpunkt-Überwindung bei einer Rastenscheibe (1), insbesondere zur Betätigung eines Automatgetriebes, wobei die Rastenscheibe (1) an ihrem Umfang eine Vielzahl von Erhebungen (2) und Senken (3) aufweist. Ein Positionierelement (5) ist mit einer daran angeordneten ersten Rolle (6) zur Bestimmung einer Schaltposition (P, R) in die Senken (3) einrastbar. Im Bereich mindestens einer der Erhebungen (2) der Rastenscheibe (1) ist eine zweite Rolle (7) im Bereich des Scheitelpunktes der Erhebung (2) derart angeordnet, daß deren Außenradius (7A) die Erhebung (2) radial auswärts überragt.

## Beschreibung

Die Erfindung betrifft eine Vorrichtung zur Totpunkt-Überwindung bei einer Rastenscheibe, insbesondere zur Betätigung eines Automatgetriebes von Fahrzeugen.

Betätigungsvorrichtungen für automatische Fahrzeuggetriebe mit Rastenscheiben sind weit verbreitet und vielfach publiziert, so z. B. in Hans-Joachim Förster, "Automatische Fahrzeuggetriebe", Springer Verlag, 1991, Seiten 344 ff. Bei diesen Betätigungsvorrichtungen, welche insbesondere in Bild 10.12 c und Bild 10.14 dieser Veröffentlichung dargestellt sind, erfolgt die Rastierung des vom Fahrer betätigten Wählhebels an der Rastenscheibe dadurch, daß ein Positionierelement mit Federkraft an die Rastenscheibe, die eine Vielzahl von Erhebungen und Senken aufweist, angedrückt wird, wobei das Positionierelement mit Hilfe der Federkraft in einer Senke der Rastenscheibe einrastet.

Hierbei entsteht das Problem, daß der Wählhebel manchmal in einer Zwischenstellung auf einer Erhebung zwischen zwei Senken in einem Totpunkt-Bereich verharren kann, ohne selbständig in eine der beiden benachbarten Senken bzw. Positionen einzurasten.

Dieses Problem besteht besonders zwischen den Schaltstellungen für Parken (P) und Rückwärtsfahrt (R), da zwischen diesen Stellungen ein besonders langer Weg erforderlich ist und sich daher relativ flache Rampen ergeben.

Konstruktiv gesehen wird beim derzeitigen Stand der Technik ein Positionierelement, z. B. eine Rastenfeder, die mit dem Gehäuse verschraubt ist und die als Tragelement für eine Rolle dient, über eine Rastenscheibe geführt. Beim Drehen einer mit der Rastenscheibe verbundenen Welle wird die Rolle über die zwischen den Erhebungen und Senken der Rastenscheibe gelegenen Rampen geführt, wobei zwischen der P- und R-Stellung ein relativ großer Abstand besteht. Aufgrund dieses Abstandes ergibt sich zwischen diesen beiden Stellungen ein relativ flacher Scheitelpunkt, der zu einem breiten Totpunkt-Bereich führt, in dem die Rastenfeder kein genügend hohes Drehmoment auf die Rastenscheibe ausüben kann, um selbständig in eine der beiden benachbarten Stellungen überzugehen. Es ist also eine undefinierte Zwischenstellung zwischen den Schaltpositionen möglich.

Hierdurch besteht die Möglichkeit, daß der Benutzer falsche Schlüsse zieht und z. B. annehmen kann, er wäre bereits in einer für das Abstellen des Fahrzeuges sicheren Parkstellung, tatsächlich befindet er sich jedoch in einer Zwischenstellung zwischen dein Rückwärtsgang und der Parkstellung.

Aus der Praxis sind Versuche bekannt, den Totpunkt-Bereich durch Ausbildung der Erhebungen zwischen zwei Schaltpositionen mit jeweils steilen Rampen zu den Senken zu minimieren.

Nachteilhafterweise erfordert jedoch eine derartige konstruktive Lösung einen unverhältnismäßig großen Bauraum und eine starke Kraftaufwendung zur Überwindung der Rampen. Zudem läßt sich mit dieser Lösung der Totpunkt-Bereich lediglich verkleinern, aber bei seiner Überwindung verbleibt stets ein Bereich mit indifferenter Schaltstellung.

Aufgabe der Erfindung ist es, eine Vorrichtung für eine Rastenscheibe als Betätigungselement eines Automatgetriebes eines Fahrzeuges zu schaffen, welche die Wahrscheinlichkeit einer Totpunkt-Stellung zwischen zwei Schaltpositionierungen auf ein Minimum reduziert.

Die Aufgabe wird durch die im kennzeichnenden Teil des Anspruches 1 genannten Merkmale gelöst.

Vorteilhafterweise wird erfindungsgemäß dadurch, daß im Bereich des Scheitelpunktes einer Erhebung am Umfang der Rastenscheibe eine weitere Rolle vorgesehen ist, erreicht, daß aufgrund der geringeren Reibung zwischen diesen beiden Rollen nur noch ein in der Praxis vernachlässigbar geringer Totpunkt-Bereich besteht.

Undefinierte Zwischenstellungen lassen sich somit durch die erfindungsgemäße Lösung vermeiden.

In einer Weiterführung des erfindungsgemäßen Gedankens wird diese zusätzliche Rolle in einem Langloch gelagert, so daß die zweite Rolle auch bei sehr geringen, seitlich wirkenden Kräften ausweichen kann, und der an sich bekannte Kirschkerneffekt entsteht. Dadurch wird der Totpunkt-Bereich bis hin zu einer virtuellen Größe reduziert.

Der oben beschriebene Effekt läßt sich noch weiter dadurch verstärken, daß die Mittellinie des Langloches eine Krümmung aufweist, die vorzugsweise entgegengesetzt der Krümmung der Mittellinie des Außenradius der Rastenscheibe verläuft.

Erfindungsgemäß ist die beschriebene Anordnung nicht darauf beschränkt, daß sich nur die Rastenscheibe gegenüber der Rastenfeder bewegt, sondern es besteht auch die Möglichkeit, die Rastenscheibe an sich feststehend vorzusehen und die Rastenfeder über die Rastenscheibe zu führen.

Weitere Vorteile und Weiterbildungen der Erfindung ergeben sich aus den weiteren Unteransprüchen und aus dem nachfolgend anhand der Zeichnung prinzipmäßig beschriebenen Ausführungsbeispiel.
Es zeigt:
- Fig. 1: einen Schnitt durch eine erfindungsgemäße Vorrichtung zur Totpunkt-Überwindung bei einer Rastenscheibe zur Betätigung eines Automatgetriebes eines Fahrzeuges;
- Fig. 2: einen Schnitt entlang der Linie I-I in Fig. 1 und
- Fig. 3: einen Ausschnitt entlang der Linie II in Fig. 1 in vergrößertem Maßstab.

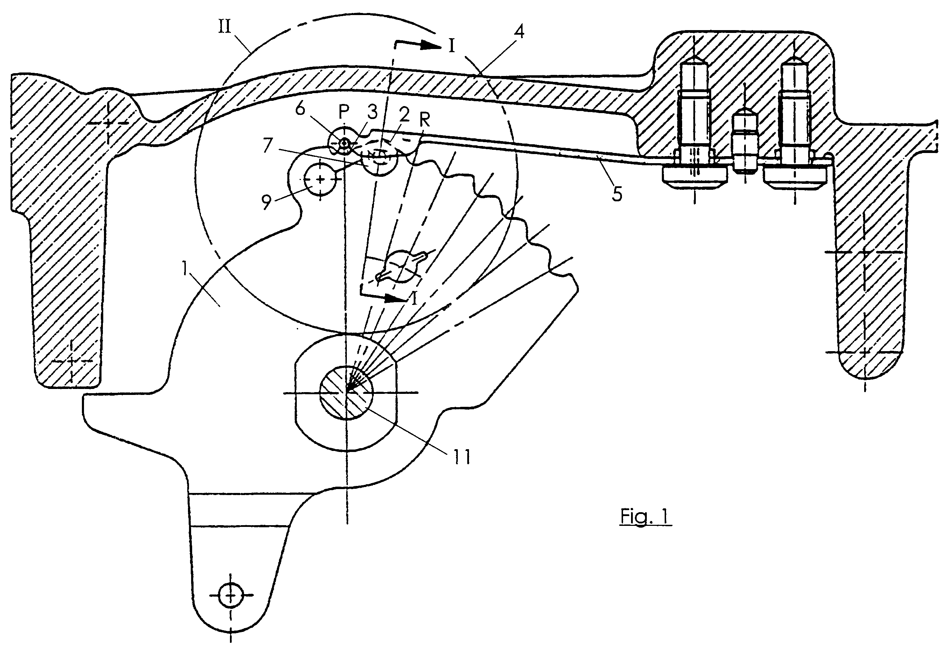

Die Fig. 1 bis 3 zeigen eine Vorrichtung zur Totpunkt-Überwindung bei einer Rastenscheibe 1 zur Betätigung eines nicht näher dargestellten Automatgetriebes eines Kraftfahrzeuges.

Die Rastenscheibe 1 weist an ihrem Umfang mehrere Erhebungen 2 und Senken 3 auf, welche Schaltpositionen, wie z. B. Parken (P) und Rückwärtsfahrt (R), bestimmen. Zur Einstellung einer Schaltposition dient ein mit einem Gehäuse 4 verschraubtes Positionierelement 5, welches eine drehbar gelagerte erste Rolle 6 aufweist, die, je nach gewählter Schaltposition, in eine der Senken 3 einrastet.

In dem in der Zeichnung dargestellten Ausführungsbeispiel ist das Positionierelement 5 als Rastenfeder ausgebildet. Diese ist in der Senke 3, welche die Parkposition (P) bestimmt, mit der Rolle 6 eingerastet.

An der Erhebung 2 zwischen den Schaltpositionen für Parken (P) und Rückwärtsfahrt (R) ist im Bereich des Scheitelpunktes dieser Erhebung eine zweite Rolle 7 an der Rastenscheibe 1 angeordnet.

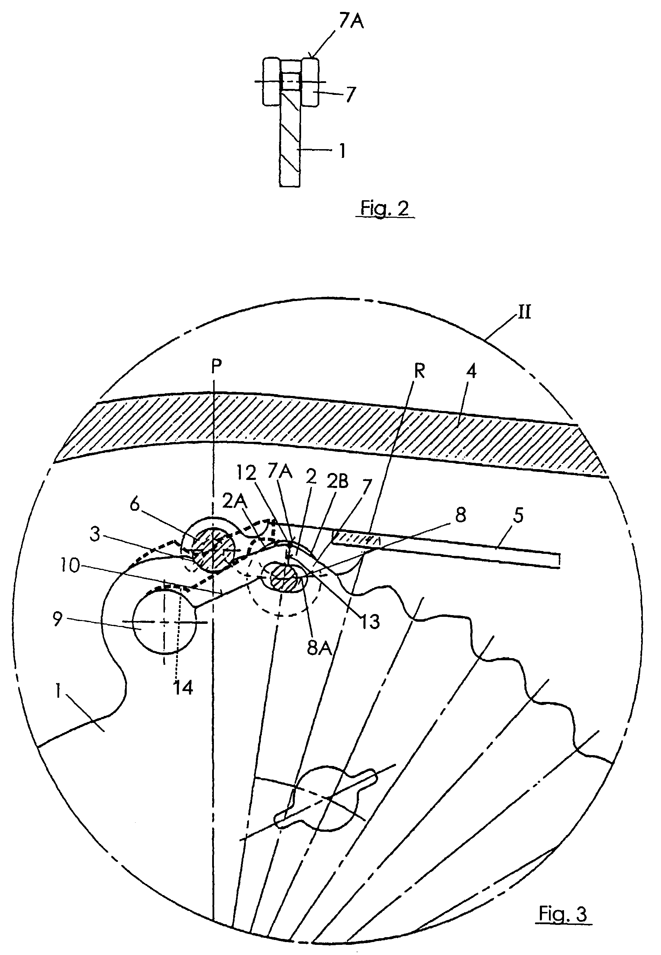

Die zweite Rolle 7 ist dabei, wie insbesondere in Fig. 2 ersichtlich ist, als Tandemrolle ausgebildet, wobei der Außendurchmesser 7A der Tandemrolle 7 die Erhebung 2 radial auswärts überragt. Die Tandemrolle 7 ist um die eigene Achse drehbar und verschieblich in einem Langloch 8, welches aus der Rastenscheibe 1 ausgespart ist, gelagert.

Aus Gründen einer einfachen Montage ist in einem an das Langloch 8 grenzenden Bereich eine Aussparung 9 sowie ein Schlitz 13 vom Langloch 8 zur Außenkontur, z. B. Scheitelpunkt 12, und ein Schlitz 10 zwischen der Aussparung 9 und dem Langloch 8 ausgestanzt. Der Bereich 14 ist im Urzustand so weit hochgestellt, daß die Rolle 7 durch den offenen Schlitz 13 in das Langloch 8 gelegt werden kann. Dann wird der Bereich 14 zugebogen.

Das Langloch 8 selbst ist derart ausgeformt, daß seine Mittellinie 8A eine Krümmung aufweist, welche entgegengesetzt der mittleren Krümmung des Außenradius der Rastenscheibe 1 verläuft.

Zur Änderung einer Schaltposition wird die Rastenscheibe 1, welche verdrehgesichert auf einer Welle 11 angeordnet ist, mittels eines - nicht dargestellten - Wählhebels, der von einem Fahrer des Fahrzeuges betätigt wird, mit der Welle 11 gedreht.

Beim Umschalten von der dargestellten Parkposition (P) in die Schaltstellung für Rückwärtsfahrt (R) wird die an der Rastenfeder 5 angebrachte Rolle 6 aus der Senke 3 heraus entlang einer Rampe 2A der Erhebung 2 bewegt. In dem Bereich, in welchem der Außenradius 7A der Tandemrolle 7 die Erhebung 2 radial auswärts betrachtet überragt, rollt die Rolle 6 auf der Tandemrolle 7 ab. Wenn die Rolle 6 den Scheitelpunkt 12 der Tandemrolle 7 erreicht, wäre theoretisch wieder eine Totpunkt-Situation gegeben, jedoch handelt es sich bei zwei direkt übereinander liegenden Rollen um ein labiles Gleichgewicht, an dem sich keine Zwischenstellung einstellen kann.

Zudem ist die Tandemrolle 7 in dem gekrümmten Langloch 8 derart gelagert, daß sie bei Hochgleiten der Rolle 6 entlang der Rampe 2A auf der konkaven Gleitbahn des Langloches 8 in die selbe Richtung, im vorliegenden Beispiel nach rechts, ausweicht. Sobald die Rolle 6 den Scheitelpunkt 12 der Tandemrolle 7 erreicht, bewegt sich die Tandemrolle 7 in dem Langloch 8 schußartig in die der Rolle 6 entgegengesetzte Bewegungsrichtung. An der Rampe 2B zur Senke der Rückwärtsfahrt-Stellung (R) entsteht ein Moment zur Welle 11, welches die Rastenscheibe 1 bis zur R-Stellung dreht.

Dieser Effekt, welcher den Gleichgewichtszustand bzw. Totpunkt beim Ubereinanderliegen beider Rollen am Scheitelpunkt 12 nur noch theoretisch zustande kommen läßt, wird als Kirschkerneffekt bezeichnet.

Wird der Scheitelpunkt der Tandemrolle 7 nicht erreicht, geht die Rastenscheibe 1 durch das vorhandene Moment zur Welle 11 in die Ausgangsstellung (P) zurück, womit auch diese Stellung wieder eindeutig ist.

### Bezugszeichen

- 1: Rastenscheibe
- 2: Erhebung
- 2A: Rampe
- 2B: Rampe
- 3: Senke
- 4: Gehäuse
- 5: Rastenfeder
- 6: Rolle
- 7: Tandemrolle
- 7A: Außendurchmesser der Tandemrolle
- 8: Langloch
- 8A: Mittellinie des Langloches
- 9: Aussparung
- 10: Schlitz
- 11: Welle
- 12: theoretischer Totpunkt
- 13: Schlitz
- 14: Bereich
- P: Schaltstellung 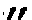 Parken 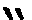
- R: Schaltstellung 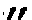 Rückwärtsfahrt 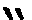

## Patentansprüche

1. Vorrichtung zur Totpunkt-Überwindung bei einer Rastenscheibe, insbesondere zur Betätigung eines Automatgetriebes, wobei die Rastenscheibe an ihrem Umfang eine Vielzahl von Erhebungen und Senken aufweist, und wobei ein Positionierelement mit einer daran angeordneten ersten Rolle zur Bestimmung einer Schaltposition in die Senken einrastbar ist, dadurch **gekennzeichnet,** daß im Bereich mindestens einer der Erhebungen (2) der Rastenscheibe (1) eine zweite Rolle (7) im Bereich des Scheitelpunktes der Erhebung (2) derart angeordnet ist, daß deren Außenradius (7A) die Erhebung (2) radial auswärts überragt.

2. Vorrichtung nach Anspruch 1, dadurch **gekennzeichnet,** daß die Achse der Rolle (7) in einem Langloch (8) verschiebbar vorgesehen ist.

3. Vorrichtung nach Anspruch 2, dadurch **gekennzeichnet**, daß die Mittellinie (8A) des Langloches (8) eine Krümmung aufweist, welche entgegengesetzt der mittleren Krümmung des Außenradius der Rastenscheibe (1) verläuft.

4. Vorrichtung nach einem der Ansprüche 1 bis 3, dadurch **gekennzeichnet,** daß die Rastenscheibe (1) um eine Achse drehbar vorgesehen ist.

5. Vorrichtung nach einem der Ansprüche 1 bis 4, dadurch **gekennzeichnet,** daß die Rastenscheibe (1) mittels eines Wählhebels betätigbar ist.

6. Vorrichtung nach einem der Ansprüche 1 bis 5, dadurch **gekennzeichnet,** daß das Positionierelement (5) als Rastenfeder ausgeführt ist.
